# EUROPEAN PATENT APPLICATION

(11) **EP 3 753 969 A1**
(43) Date of publication of application: **23.12.2020**
(21) Application number: 19305790.8
(22) Date of filing: 19.06.2019
(51) Int. Cl.: C08G 69/26, C08L 77/06, C08L 77/10

(54) **METHOD FOR PRODUCTION OF THERMOPLASTIC COMPOSITES AND THEIR USES**

(71) Applicant: Rhodia Operations, 93300 Aubervilliers (FR)
(72) Inventor: LAHARY, Pierre-Yves, 69006 Lyon (FR); BOCAHUT, Anthony, 20148 Milano (IT); BADEL, Thierry, 69008 Lyon (FR)
(74) Representative: Roussel, Sandrine

(57) **Abstract**

The invention relates to a method for the production of a fiber reinforced polymer composite comprising carrying out a polymer matrix comprising a polyamide, and continuous reinforcing fibers, such as glass or carbon fibers. The invention further relates to fiber reinforced polymer composite.

## Description

### FIELD OF THE INVENTION

The invention relates to a method for the production of a fiber reinforced polymer composite comprising carrying out a polymer matrix comprising a polyamide, and continuous reinforcing fibers, such as glass or carbon fibers. The invention further relates to fiber reinforced polymer composite.

Thermoplastic composites are gaining a significant amount of attention as a potential replacement for metal parts. Relative to metal parts, thermoplastic composites can provide a significant reduction in weight and cost, while simultaneously providing desirable or superior mechanical performance. In particular, composite tapes and profiles are now high performance materials for mass market industries such as ground transport (automobiles...), energy, sport and leisure, agricultural machinery or civil engineering, or more limited, but developing markets such as aerospace. In fact they have good intrinsic mechanical performance, in particular ductility and impact resistance, good chemical stability, particularly towards solvents and total recyclability for high performance injection molded parts. One type of polymer used in thermoplastic composites is semi-crystalline polypthalamide ("PPA") polymers. The popularity of semi-crystalline PPA polymers in thermoplastic composites is at least in part due to the fact that they form crack-free composites. However, due to their high viscosity, time processing of thermoplastic composites is important, which can lead to significant processing costs.

Pultrusion technology, used in particular for producing such composite tapes and profiles, is a production method according to which a reinforcement, for example fibers packed in coils, is impregnated with a polymer matrix by passing into a bath of oligomer or molten polymer and pulled through a die to obtain tapes and which progressively ensures the shaping of the composite material to the profile to be produced.

It should be noted that thermoplastic resins are nowadays preferred for forming the matrix of these tapes and profiles in comparison to the widely utilized thermosetting resins resulting in non-recyclable products.

However, the continuous development of reinforced thermoplastic tapes and profiles by pultrusion is currently limited particularly with regard to problems of process and associated cost.

Thus, the thermoplastic polymers available on the market have a high viscosity in the molten state, which renders the impregnation of the reinforcing fabrics difficult and above all when the proportion of fibers becomes large, in particular when it is greater than 45% by volume. The use of this type of polymer requires prolonged impregnation times, that is to say a slow or very slow reinforcing material pulling speed.

There thus remains a need for a technique for producing composite tapes and profiles based on a thermoplastic material, compatible with a production mode which is continuous and free from the aforesaid problems. It was surprisingly discovered that thermoplastic composites can be produced, notably by pultrusion, by using a polyamides, having a high melt fluidity and good mechanical properties. Therefore thermoplastic composites, in particular crack free composite, can be formed using well-known melt impregnation techniques.

Thus, according to one of its aspects, the present invention relates to a method for the production of a fiber reinforced polymer composite comprising at least impregnating continuous reinforcing fiber with a polymer matrix comprising at least a polyamide comprising structural units of formula (1) 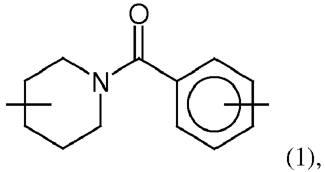 pulling the polyamide-impregnated fibers through a die, and at least partially solidifying polyamide-impregnated fiber in order to obtain the fiber reinforced polymer composite.

In a particular embodiment, the method according to the invention, comprising at least the steps of:
(a) impregnating a continuous fiber reinforcement with a polymer matrix comprising at least a polyamide comprising the structural units of formula (I),
(b) pultruding the continuous reinforcing fiber impregnated with the polyamide through a heated die; maintaining the temperature of the impregnated reinforcing fiber being pultruded at a temperature which is at least about at the lower end of the melting range of the polymer matrix in the case of semi-crystalline polyamide or which is greater than Tg + 50°C, in particular Tg + 100°C, especially from Tg + 50°C to Tg + 280°C, in the case of amorphous polyamide;
(c) conveying the impregnated reinforcing fiber to a cooling zone; and
(d) cutting and recovering the fiber reinforced polymer composite.

In the instant specification, by "pultruded" is meant acting of drawing resin-coated fibers through a die. Pultrusion is a technique well known to a person skilled in the art.

The polymer matrix comprises at least a polyamide comprising structural units of formula (1):

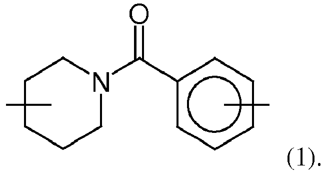

The polymer matrix according to the invention comprises, optionally, at least one additive.

Generally, the concentration of the polyamide in the polymer matrix is at least 50 wt.%, at least 60 wt.%, at least 70 wt.% at least 80 wt.%, at least 90 wt.%, at least 95 wt.% or at least 99.5 wt.%, or equal to 100 wt.%, relative to the total weight of the matrix composition. Of course the polyamide of the polymer matrix can include a plurality of distinct polyamide. In such embodiments, the total concentration of the polyamide is within the ranges described above.

In some embodiments, in addition to the polyamide, the polymer matrix can further include optional additives, including but not limited to, antioxidants (e.g. ultraviolet light stabilizers and heat stabilizers), plasticizers, pigments, dyes, processing aids, nucleating agents, lubricants, flame retardants, a smoke-suppressing agents, anti-static agents, antiblocking agents, matting agents, reinforcing fillers, impact-resistance modifiers as elastomer polymers, and conductivity additives such as carbon black.

Additives for improving the quality of the thermoplastic polymer reinforcing fiber interfaces may also be used. These additives may for example be incorporated into the composition. Such additives may for example be coupling agents, such as those of aminosilane or chlorosilane type or those of polyurethane or polyimide type, or liquefying or wetting agents, or their combination.

Reinforcing fillers may be incorporated into the thermoplastic composition. These fillers may be selected from fibrous fillers, such as short glass fibers, for example, or non-fibrous fillers, such as kaolin, talc, silica, mica or wollastonite. Their size is generally between 0.5 and 10 µm. Submicronic, indeed even nanometric, fillers may also be used, alone or supplementing the other fillers.

These fillers and additives may be added to the composition by the usual means appropriate to each filler or additive, such as, for example, during polymerization or in melt-blending.

Here, and throughout the invention any bond crossing a ring structure means that the following atom is connected to any position of the ring by replacing a hydrogen atom. For example, in formula (1), the next (not shown) atom to which the pyridine ring is linked may be attached at 2-, 3- or 4-position relative to the nitrogen atom. The next (not shown) atom to which the phenyl ring is linked may be attached at ortho, meta or para position relative to the carboxy group.

In one embodiment, the polyamide of the invention comprises structural units of formula (2): 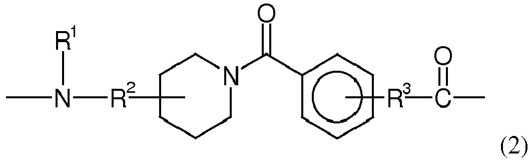
wherein R¹ is hydrogen, an organic monovalent residue, or an organic divalent residue which forms a ring together with R², and
R² and R³ are independently a bond or an organic divalent residue.

In the above structural unit of formula (2), R¹ preferably is hydrogen or a linear, branched, cyclic and/or aromatic C₁₋₃₀ hydrocarbon residue. Optionally, this residue may form a ring together with R². If such ring is formed, any atom of the R¹ hydrocarbon residue may be attached to any atom of R².

In the context of the present invention the term "hydrocarbon residue" is understood as a residue which mainly consists of carbon and hydrogen atoms. It is, however, also possible that the hydrocarbon residue contains heteroatoms, such as O, N, P, S, etc. In a preferred embodiment, the hydrocarbon residue consists of carbon and hydrogen atoms.

R² and R³ may independently be a bond or a linear, branched, cyclic and/or aromatic C₁₋₃₀ hydrocarbon residue, wherein the hydrocarbon residue is defined as above.

In a preferred embodiment, R¹ in the structural unit of formula (2) is hydrogen or a linear, branched, cyclic and/or aromatic C₁₋₃₀ hydrocarbon residue which optionally forms a ring together with R², and R² and R³ are independently a bond or a linear, branched, cyclic and/or aromatic C₁₋₃₀ hydrocarbon residue.

In a further embodiment, R¹ is hydrogen or a C₁₋₆ alkyl residue, which optionally forms a ring together with R², R² is a bond or a linear, branched and/or cyclic C₁₋₂₄ alkyl residue, preferably a bond or a linear C₁₋₂₄ alkyl residue, more preferably a bond or a C₁₋₆ alkyl residue, and R³ is a bond, a C₁₋₆ alkylaryl residue or an aryl residue preferably a bond or a phenyl residue.

The polyamide of the invention may comprise other structural units in addition to the above structural units. For example, the polyamide may comprise additional structural units being derived from caprolactame, hexamethylenediamine, phenylenediamine, adipic acid, etc. It is, however, preferred that such additional structural units are present in an amount of less than 50 %, preferably less than 30 % and even more preferably of less than 20 % of the total number of structural units in the polyamide. More preferably, the polyamide is a homopolymer which consists of structural units of formula (2).

The polyamide is obtainable by polymerization of a diamine of formula (3): 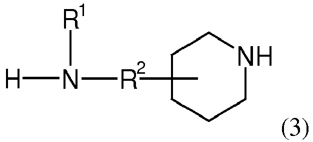
wherein R¹ and R² are defined as above;
with an aromatic dicarboxylic acid, ester or halogenide of formula (4): 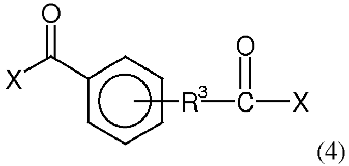 wherein R³ is defined as above and X is hydroxy, halogen, C₁₋₆ alkoxy or C₂₋₂₀ aryloxy, preferably phenoxy.

Without otherwise specified, in the instant specification polyamide means homopolyamide or copolyamide.

The polyamide may be amorphous or semi-crystalline. By semi-crystalline is meant a polyamide having an amorphous phase and a crystalline phase, in particular the degree of crystallinity is in the range of 1 to 85%. What is meant by amorphous is a polyamide having no crystalline phase detected by thermal analysis, such as DSC (Differential Scanning Calorimetry) and with X-ray diffraction. Heat of fusion (ΔHf) may range from 2 to 170 J/g as measured according to ASTM D3418 using a heating and cooling rate of 10°C/min.

By thermoplastic polyamide is meant a polyamide having a temperature above which the material is softening and melts without being degraded and which is hardening below such a temperature.

In the instant specification homopolyamide means a polyamide comprising an amount of one repeating unit of at least 95% relative to the total number of repeating units in the polyamide. On the other hand copolyamide means a polyamide comprising less than 95% of one repeating unit relative to the total number of repeating units in the polyamide.

Advantageously, the polyamide is thermoplastic. The polyamide may be amorphous; in this case it may have a Tg≦280°C, which can be measured according to ASTM D3418 using a heating and cooling rate of 10°C/min. The polyamide may also semi-crystalline, and may have a Tm of less or equal to 370°C, notably less or equal to 350°C, particularly comprised from 150°C to 370°C.

The glass transition temperature (referred herein as Tg) is the point at which a material goes from a hard brittle state to a soft rubbery state. Amorphous polymers only have a Tg. Crystalline polymers exhibit a Tm (melt temperature) and typically a Tg since there is usually an amorphous portion as well ("semi"-crystalline). Tg of polymers may be measured by well-known methods such as by Differential Scanning Calorimetry (DSC). Simply stated, DSC utilizes a heat flow technique and compares the amount of heat supplied to the test sample and a similarly heated "reference" to determine transition points. Tg is typically calculated by using a half-height technique in the transition region. The heating rate and sample heat history are a couple of factors that may affect the test result. Depending on the equipment capability, DSC can be used for a wide range of thermoplastic and thermoset polymers.

The polyamide may comprise an amount of repeating units of formula (1), comprising at least one amide bond, from 2 to 100%, preferably from 10 to 100% relative to the total number of repeating units in the polyamide.

In one embodiment, the diamine from which the polyamide of the invention is obtainable has the formula (5): 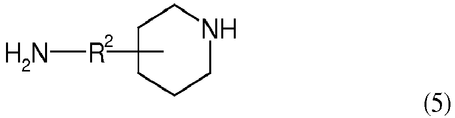 wherein R² is defined as above. Preferably, R² is attached at 2- or 4-position of the piperidine ring.

In another embodiment, the diamine, from which the polyamide of the invention is obtainable has the formula (6): 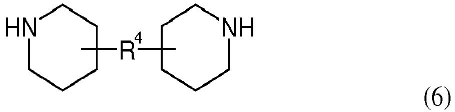 wherein R⁴ is a bond or a linear, branched and/or cyclic C₁₋₂₄ alkyl residue, preferably a bond or a linear C₁₋₂₄ alkyl residue.

In a preferred embodiment, the diamine from which the polyamide of the invention is obtainable has the formula (7): 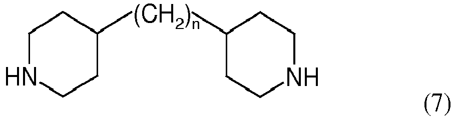 wherein n is an integer of 0 to 24, preferably 0 to 16, more preferably 2 to 16, even more preferably 3 to 10.

Examples of suitable diamines, from which the polyamide according to the invention can be obtained are 4,4'-bipiperidine, 4,4'-ethylenedipiperidine, 4,4'-trimethylenedipiperidine, 4-aminopiperidine, 4-(aminomethyl)piperidine, 2-(aminomethyl)piperidine, 3-(aminoethyl)piperidine, and 4-(aminobutyl)piperidine. Preferred diamines are 4,4'-trimethylenedipiperidine and 4-aminopiperidine.

The amount of diamine of formula (3) may be comprised from 2 to 100 mol %, preferably from 10 to 100 mol % relative to the total amount of diamine monomers in the polyamide.

The amount of repetitive units of formula (1) may be comprised from 2 to 100 mol %, preferably from 10 to 100 mol % relative to the total amount of repetitive units in the polyamide.

The polyamide may also comprise at least one other diamine. This diamine may respond to the following formula H₂N-R-NH₂ wherein R is an aliphatic, an aromatic, an arylaliphatic or an alkylaromatic radical. In particular the diamine R radical, especially when free of heteroatom such as oxygen, comprises from 1 to 36 carbon atoms and more particularly from 4 to 14 carbon atoms.

By "arylaliphatic" is meant a radical comprising an aromatic cycle and which is linked to the main chain of the polymer by bonds on the aliphatic part, such as the radical meta-xylylene, for example deriving from meta-xylylene diamine.

By "alkylaromatic" is meant a radical substituted by alkyl radical(s) and which is linked to the main chain of the polymer by bonds on the aromatic part.

The radical R of the diamine may be free of heteroatom, or may comprise a heteroaom, such as oxygen, nitrogen, phosphorus or sulphur, in particular oxygen or sulphur, and more particularly oxygen. When a heteroatom is present it may:
- interrupt the chain of the radical, for example as an ether function,
- be in a functional group interrupting the chain of the radical, such as carbonyl or sulfone function, and/or
- be in a function grafted on the chain, such as a hydroxyl, sulfonic or sulfonate functions.

When the R radical is aliphatic it may be free of heteroatom. The aliphatic radical may be alicyclic or cycloaliphatic.

The diamines comprising an alicyclic aliphatic radical may comprise from 2 to 12 carbon atoms, they may be chosen from 1,2-diaminoethane, 1,3-diaminopropane, 1,3-diaminobutane, 1,4-diaminobutane, 1,5-diaminopentane, 1,6-diaminohexane or hexamethylene diamine (HMD), 2-methyl pentamethylene diamine, 2-methyl hexamethylene diamine, 3-methyl hexamethylene diamine, 2,5-dimethyl hexamethylene diamine, 2,2-dimethylpentamethylene diamine, 1,8-diaminooctane, methyl-1,8-diamino octane, in particular as the mixture of methyl-1,8-diamino octane and 1,9-diamino nonane sold by Kuraray, 1,9-diamino nonane, 5-methylnonane diamine, 1,10-diamino decane or decamethylenediamine, 1,12-diamino dodecane, or dodecamethylene diamine, 2,2,4-trimethyl hexamethylene diamine and/or 2,4,4-trimethyl hexamethylene diamine, and/or 2,2,7,7-tetramethyl octamethylene diamine.

The aliphatic radical R may be a cycloaliphatic radical, in particular mono- or dicyclic. Each cycle may comprise from 4 to 8 carbon atoms, more particularly the cycle comprise 4, 5 or 6 carbon atoms. The cycloaliphatic radical may be saturated or unsaturated, and may comprise one or two double bonds. The cycloaliphatic radical may comprise from 6 to 12 carbon atoms. Among the cycloaliphatic diamines may be cited 1,2-diaminocyclohexane, 1,3-diaminocyclohexane, 1,4-diaminocyclohexane, in particular trans stereoisomer, the 4,4'-methylenebis(cyclohexyl amine), 1,3-bis(aminomethyl)cyclohexane, 1,4-bis(aminomethyl)cyclohexane, diaminodicyclohexylmethane, isophoronediamine, C36 diamine dimer, and 2,5-bis(aminomethyl)tetrahydrofuran, being cis, trans or a mixture of the stereoisomers.

The aliphatic radical R may also comprise at least one heteroatom, in particular oxygen. Among this type of radical may be cited polyether diamines such as Jeffamine® and Elastamine®, from Huntsman, in particular having a molecular weight ranging from 100 to 5000 g/mol.

The diamine R radical may be aromatic, arylaliphatic or alkylaromatic, it may comprise from 6 to 24 carbon atoms, in particular from 6 to 18 carbon atoms and more particularly from 6 to 10 carbon atoms. It may be a mono- or di-cyclo compound, such as benzene or naphthalene.

The aromatic, arylaliphatic or alkylaromatic diamine may be chosen from diaminodiphenylmethane and its isomers, sulfonyldianiline and its isomers, 3,4'-oxydianiline also called 3,4'-diaminodiphenyl ether, 1,3-bis-(4-aminophenoxy)benzene, 1,3-bis-(3-aminophenoxy)benzene ; 4,4'-oxydianiline also called 4,4'-diaminodiphenyl ether, 1,4-diaminobenzene, 1,3-diaminobenzene, 1,2-diaminobenzene, 2,2'-bis(trifluoromethyl)benzidene, 4,4'-diaminobiphenyl; 4,4'-diaminodiphenyl sulphide, 9,9'-bis(4-amino)fluorene; 4,4'-diaminodiphenyl propane, 4,4'-diaminodiphenyl methane, benzidine, 3,3'-dichlorobenzidine, 3,3'-diaminodiphenyl sulfone, 4,4'-diaminodiphenyl sulfone, 1,5-diamino naphthalene, 4,4'-diaminodiphenyl diethylsilane, 4,4'-diamino diphenysilane, 4,4'-diaminodiphenyl ethyl phosphine oxide, 4,4'-diamino diphenyl N-methyl amine, 4,4'-diamino diphenyl N-phenyl amine, m-phenylene diamine, p-phenylene diamine, m-xylylenediamine, p-xylylendiamine, and 2,5-bis(aminomethyl)furan.

In particular the diamine is chosen from m-phenylene diamine, p-phenylene diamine, m-xylylenediamine, p-xylylenediamine, hexamethylenediamine, 2-methylpentamethylene-diamine, 1,9-diaminononane, 1,10-diaminodecane, 1,12-diaminododecane, diaminodiphenylmethane and sulfonyldianiline.

The aromatic dicarboxylic acid, ester or halogenide from which the polyamide according to the invention can be obtained is not particularly limited and can be selected from known aromatic dicarboxylic acids and their derivatives. In a preferred embodiment, the dicarboxylic acid, ester or halogenide has the above formula (4) wherein in a more preferred embodiment R³ is a bond or aryl, even more preferably a bond or phenyl.

The dicarboxylic acid may be an aromatic diacid [acid (AR)], in particular chosen from isophthalic acid, terephthalic acid, orthophthalic acid, naphthalene dicarboxylic acid, more particularly 2,6-napthalene dicarboxylic acid, 2,7-napthalene dicarboxylic acid, 1,4-napthalene dicarboxylic acid, 2,3-napthalene dicarboxylic acid, 1,8-napthalene dicarboxylic acid, and 1,2-napthalene dicarboxylic acid, 2,5-pyridine dicarboxylic acid, 2,4-pyridine dicarboxylic acid, 3,5-pyridine dicarboxylic acid, 2,2-bis-(4-carboxyphenyl)propane, bis(4-carboxyphenyl)methane, 2,2-bis-(4-carboxyphenyl)hexafluoropropane, 2,2-bis-(4-carboxyphenyl)ketone, 4,4'-bis(4-carboxyphenyl)sulfone, 2,2-bis(3-carboxyphenyl)propane, bis(3-carboxyphenyl)methane, 2,2-bis-(3-carboxyphenyl)hexafluoropropane, 2,2-bis-(3-carboxyphenyl)ketone, bis(3-carboxyphenyl)methane and 4,4'-biphenyl dicarboxylic acid, 2-hydroxyterephthalic acid, 5-hydroxyisophthalic acid, 4-hydroxyisophthalic acid, 2,5-dihydroxyterephthalic acid, sodium 5-sulfoisophthalate, or AISNa, lithium 5-sulfoisophthalate, or AISLi, potassium 5-sulfoisophthalate, or AISK, and 2,5-furandicarboxylic acid.

Examples of suitable dicarboxylic acids from which the poylamide according to the invention can be obtained are isophthalic acid, terephthalic acid, diphenic acid, and biphenyl-4,4'-dicarboxylic acid, among which isophthalic acid, terephthalic acid and diphenic acid are preferred.

The polyamide mays also comprise also at least one, in particular one or two, and more particularly one dicarboxylic acid.

The dicarboxylic acid may be an aliphatic diacid [acid (AL), herein after], in particular alicyclic, and more particularly chosen from oxalic acid (HOOC-COOH), malonic acid (HOOC-CH₂-COOH), succinic acid (HOOC-(CH₂)₂-COOH), glutaric acid (HOOC-(CH₂)₃-COOH), 2-methyl-glutaric acid (HOOC-CH(CH₃)-(CH₂)₂-COOH), 2,2-dimethyl-glutaric acid (HOOC-C(CH₃)₂-(CH₂)₂-COOH), adipic acid (HOOC-(CH₂)₄-COOH), 2,4,4-trimethyl-adipicacid (HOOC-CH(CH₃)-CH₂-C(CH₃)₂-CH₂-COOH), pimelic acid (HOOC-(CH₂)₅-COOH), suberic acid (HOOC-(CH₂)₆-COOH), azelaic acid (HOOC-(CH₂)₇-COOH), sebacic acid (HOOC-(CH₂)₈-COOH), undecanedioic acid (HOOC-(CH₂)₉-COOH), dodecanedioic acid (HOOC-(CH₂)₁₀-COOH), tridecanedioic acid (HOOC-(CH₂)₁₁-COOH), tetradecanedioic acid (HOOC-(CH₂)₁₂-COOH), pentadecanedioic acid (HOOC-(CH₂)₁₃-COOH), hexadecanedioic acid (HOOC-(CH₂)₁₄-COOH), octadecanedioic acid (HOOC-(CH₂)₁₆-COOH) and C₃₆ fatty acid dimer, in particular the one known as Pripol® by Croda.

The dicarboxylic acid may be a cycloaliphatic dicarboxylic acid comprising at least one carbocyclic ring having from 4 to 8 carbon atoms in the ring, like e.g. cyclohexane dicarboxylic acids, in particular such as 1,2-cyclohexane carboxylic acid, 1,3-cyclohexane dicarboxylic acid and 1,4-cyclohexane dicarboxylic acid, 2,5-tetrahydrofurandicarboxylic acid, these acids may be cis, trans or mixtures thereof.

The dicarboxylic acid may be an aromatic diacid [acid (AR)] as previously described.

The polyamide may also comprise amino-acid repeating units. These repeating units may arise from lactams or amino-acids, in particular chosen from caprolactam, 6-aminohexanoic acid, 10-aminodecanoic acid, 11-aminoundecanoic acid, and 12-dodecanolactam.

The amount of repeating units arising from lactams or amino-acids may range from 0.1 to 50 mol %, in particular from 0.1 to 10 mol %, and more particularly from 0.1 to 5 mol % relative to the total amount of repeating units in the polyamide.

According to a preferred embodiment, the polyamide comprises recurring units derived from:
TMDP.T (trimethylenedipepiridine, terephtalic acid)
TMDP.I (trimethylenedipepiridine, isophthalic acid)
TMDP.DA (trimethylenedipepiridine, diphenic acid)
TMDP.T / 6T (trimethylenedipepiridine, terephtalic acid, hexamethylene diamine)
TMDP.I / 61 (trimethylenedipepiridine, isophthalic acid, hexamethylene diamine)
TMDP.T / 9T (trimethylenedipepiridine, terephtalic acid, nonanediamine)
TMDP.I / 9I (trimethylenedipepiridine, isophthalic acid, nonanediamine)
TMDP.T / 10T (trimethylenedipepiridine, terephtalic acid, decanediamine)
TMDP.I / 101 (trimethylenedipepiridine, isophthalic acid, decanediamine)
TMDP.T / TMDP.6 (trimethylenedipepiridine, terephtalic acid, adipic acid)
TMDP.I / TMDP.6 (trimethylenedipepiridine, isophthalic acid, adipic acid)
TMDP.T / TMDP.10 (trimethylenedipepiridine, terephtalic acid, sebacic acid)
TMDP.I / TMDP.10 (trimethylenedipepiridine, isophthalic acid, sebacic acid)
According to another embodiment, the polyamide is a homopolyamide, in particular an aliphatic homopolyamide, obtained through polymerisation of one a diamine of formula (3), with a dicarboxylic acid of formula (4).

In addition, the polyamide may also comprise at least one, in particular one, mono-functional compound, such compounds may be chosen from monoamines, monoanhydrides, monoacids or α,β diacids such as they are able to from an intramolecular anhydride function, among chain limiters may be cited phthalic anhydride, 1-aminopentane, 1-aminohexane, 1-aminoheptane, 1-aminooctane, 1-aminononane, 1-aminodecane, 1-aminoundecane, 1-aminododecane, benzylamine, ortho-phthalic acid, or 1,2-benzenedicarboxylic acid, acetic acid, propionic acid, benzoic acid, stearic acid or their mixtures.

Amino End Groups (AEG) of the polyamide may be comprised from 5 to 550 meq/kg. Carboxylic End groups (CEG) of the polyamide may be comprised from 5 to 550 meq/kg. AEG and CEG may be measured by an acido-basic titration after solubilisation of the polyamide in a solvent. Sum of end groups (AEG + CEG) values may be comprised from 10 to 900 meq/kg, preferably from 150 to 600 meq/kg.

The molecular weight of the polyamide according to the invention is not particularly limited and can be selected by a person skilled in the art according to the requirements. It is, however, preferred that the number average molecular weight (Mn) of the polyamide is higher than 2,500 g/mol, preferably higher than 3,000 g/mol. On the other hand, in view of its processability, its moldability and mechanical properties the molecular weight of the polyamide should not exceed a certain limit. Therefore, the number average molecular weight (Mn) should be lower than 10,000 g/mol, preferably lower than 8,000 g/mol and even more preferably lower than 7,000 g/mol. The number average molecular weight (Mn) may range from 2,500 to 12,000 g/mol, notably from 2,500 to 10,000 g/mol, particularly from 3,000 to 10,000 g/mol. The number average molecular weight (Mn) of the polyamide may be calculated by end groups analysis.

The polyamide may also have a number average molecular weight (Mn) comprised from 6000 to 30000 g/mol, in particular from 10000 to 20000 g/mol, as notably determined by Size Exclusion Chromatography. The polyamide may have a weight-average molecular weight (Mw) comprised from 20000 to 150000 g/mol, in particular from 30000 to 100000 g/mol, as notably determined by Size Exclusion Chromatography. Preferably the Polydispersity Index, as a measure of the broadness of a molecular weight, defined by Mw/Mn ratio is comprised from 2 to 10, preferably from 2 to 8.

By determined by Size Exclusion Chromatography is meant a determination as follows: The Size Exclusion Chromatography for measuring relative molecular weights is performed in Hexafluoroisopropanol (HFIP) with 25 mM sodium trifluoroacetate (0.225 % w/w sodium trifluoroacetate in HFIP) as a solvent at 40°C, followed by refractometry RI. Determination of the relative molecular weight and molecular weight distribution is realised by a conventional calibration with polymethylmethacrylate standards (PMMA).

The number average molecular weight of the polyamide may notably be controlled by the following means:
- by using chain limiter(s), i.e. mono-functional compounds, in particular such as defined above,
- by a stoechiometric desequilibrium r=[poly carboxylic acid]/[diamine], wherein r may range from 0.8 to 1.2, preferentially from 0.9 to 1.1"
- by adjusting the synthesis parameters, such as the reaction time, temperature, humidity, or pressure, or
- by a combination of this different means.

One advantage of the polyamides according to the invention is their low glass transition temperature. Preferably, the glass transition temperature of the polyamide is below 210°C, more preferably below 180°C and even more preferably below 150°C.

The polyamide of the invention may be obtained by molten polymerisation from mixtures of monomers or from their salts.

The polyamide may be obtained from polymerization medium which can, for example, be an aqueous solution comprising the monomers or a liquid comprising the monomers. Advantageously, the polymerization medium comprises water as solvent. This facilitates the stirring of the medium and thus its homogeneity. The polymerization medium can also comprise additives, such as chain-limiting agents. The polyamide is generally obtained by polycondensation between the various monomers, present in all or in part, in order to form polyamide chains, with formation of the elimination product, in particular water, a portion of which may be vaporized. The polyamide is generally obtained by heating, at high temperature and high pressure, for example an aqueous solution comprising the monomers or a liquid comprising the monomers, in order to evaporate the elimination product, in particular the water, present initially in the polymerization medium and/or formed during the polycondensation, while preventing any formation of solid phase in order to prevent the mixture from setting solid.

The polycondensation reaction may be carried out at a pressure from 20 mbar to 15 bar, notably from 100 mbar to 1 bar, for instance 200 to 500 mbar.

The polycondensation reaction may be carried out at a temperature from 100 to 380°C, in particular from 180 to 300°C, even more particularly from 250 to 300°C. The polycondensation may be continued in the molten phase at atmospheric or reduced pressure, so as to achieve the desired degree of progression.

The polycondensation product is a molten polymer or prepolymer. It can comprise a vapour phase essentially composed of vapour of the elimination product, in particular of water, capable of having been formed and/or vaporized.

This product can be subjected to stages of separation of vapour phase and of finishing in order achieving the desired degree of polycondensation. The separation of the vapour phase can, for example, be carried out in a device of cyclone type. Such devices are known.

The finishing consists in keeping the polycondensation product in the molten state, under a pressure in the vicinity of atmospheric pressure or under reduced pressure, for a time sufficient to achieve the desired degree of progression. Such an operation is known to a person skilled in the art.

The crystallinity of the polyamides can be determined by measuring the heat of the fusion of the polyamide ("ΔH_{f}"). In some embodiments, the polyamides of interest herein can in particular exhibit a heat of fusion of no more than 75 Joules per gram ("J/g"). In some embodiments, the polyamides can have a heat of fusion of no more than 50 J/g or no more than 40 J/g. The heat of fusion can be measured as described below.

In some embodiments, the polyamides can in particular exhibit a selected thermal window, defined by the difference in the degradation temperature ("Td") and the melting temperature ("Tm") of the polyamide, as represented by the following formula: T_{d} - Tₘ of at least 20°C, notably 40°C, for example 60° C. In some embodiments, the polyamides can have a thermal windows of no more than 200° C or no more than 120° C. Td and Tm can be measured as described below and in the examples.

The polyamide melting temperature ("Tₘ") and heat of fusion ("ΔH_{f}") can be measured according to ASTM D3418 standard method using a differential scanning calorimeter (TA Instruments DSC Q20) and a liquid nitrogen cooling system operated with TA Thermal Advantage and Universal Analysis software. The measurements can be carried out using a heating and cooling rates of 10° C/min. in a nitrogen atmosphere. The Tₘ and ΔH_{f} values can be determined from the second heating scan.

As previously stated, the method according to the invention carries out at least one continuous reinforcing fiber. The reinforcing fiber is a continuous reinforcing fiber, meaning the reinforcing fibers have an average length in the longest dimension of at least 5 millimeters ("mm"), at least 10 mm, at least 25 mm or at least 50 mm.
Continuous reinforcing fiber usually refers to a macroscopically homogeneous body having a high ratio of length to width across its cross-sectional area perpendicular to its length. The fiber cross section can be any shape, but is typically round. The fibrous material may be in any suitable form known to a person skilled in the art and is preferably selected from non-woven structures, textiles, fibrous battings and combinations thereof. Non-woven structures can be selected from random fiber orientation or aligned fibrous structures. Examples of random fiber orientation include without limitation chopped and continuous material which can be in the form of a mat, a needled mat or a felt. Examples of aligned fibrous structures include without limitation unidirectional fiber strands, bidirectional strands, multidirectional strands, multi-axial textiles. Textiles can be selected from woven forms, knits, braids and combinations thereof. The fibrous material can be continuous or discontinuous in form. Depending on the end-use application of the composite structure and the required mechanical properties, more than one fibrous materials can be used, either by using several same fibrous materials or a combination of different fibrous materials, i.e. the composite structure according to the present invention may comprise one or more fibrous materials. An example of a combination of different fibrous materials is a combination comprising a non-woven structure such as for example a planar random mat which is placed as a central layer and one or more woven continuous fibrous materials that are placed as outside layers. Such a combination allows an improvement of the processing and thereof of the homogeneity of the composite structure thus leading to improved mechanical properties. The fibrous material may be made of any suitable material or a mixture of materials provided that the material or the mixture of materials withstand the processing conditions used during impregnation by the matrix resin composition.

Specifically, the continuous reinforcing fiber used in the present invention may be notably in the form of filaments, fibers, strands, woven mats, nonwoven mats and the like.

Preferably, the fibrous material comprises glass fibers, carbon fibers, aramid fibers, graphite fibers, metal fibers (e.g. aluminum, titanium or magnesium fiber), ceramic fibers, natural fibers or mixtures thereof; more preferably, the fibrous material comprises glass fibers, carbon fibers, aramid fibers, natural fibers or mixtures thereof; and still more preferably, the fibrous material comprises glass fibers, carbon fibers and aramid fibers or mixture mixtures thereof. By natural fiber, it is meant any of material of plant origin or of animal origin. When used, the natural fibers are preferably derived from vegetable sources such as for example from seed hair (*e.g*. cotton), stem plants (e.g. hemp, flax, bamboo; both bast and core fibers), leaf plants (*e.g.* sisal and abaca), agricultural fibers (*e.g.* cereal straw, corn cobs, rice hulls and coconut hair) or lignocellulosic fiber (*e.g.* wood, wood fibers, wood flour, paper and wood-related materials). As mentioned above, more than one fibrous materials can be used. A combination of fibrous materials made of different fibers can be used such as for example a composite structure comprising one or more central layers made of glass fibers or natural fibers and one or more surface layers made of carbon fibers or glass fibers. Preferably, the fibrous material is selected from woven structures, non-woven structures or combinations thereof, wherein said structures are made of glass fibers and wherein the glass fibers are E-glass filaments with a diameter between 8 and 30 microns and preferably with a diameter between 10 to 24 microns.

The fibrous material may further contain a thermoplastic material and the materials described above, for example the fibrous material may be in the form of commingled or co-woven yarns or a fibrous material impregnated with a powder made of a thermoplastic material that is suited to subsequent processing into woven or non-woven forms, or a mixture for use as a uni-directional material or a fibrous material impregnated with oligomers that will polymerize in situ during impregnation.

More specifically, the reinforcing materials may be glass, carbon, metal, phosphate, ceramic or polymeric fibers and may contain sizes or coatings to promote bonding of the resin component to the reinforcing material.

These reinforcing fibers preferably have a grammage, that is to say weight per square meter, of between 45 and 1500 g/m², preferably between 50 and 1000 g/m², in particular between 100 and 700 g/m².

Their structure may be random, unidirectional (UD) or multidirectional (2D, 2.5D, 3D or other). In particular, these reinforcing fibers may be selected from unidirectional fibers, equilibrated or non-equilibrated fabrics, tapes, braids, non crimp fabric and mixtures thereof.

A composite article obtained by means of the process according to the invention may comprise several reinforcing fabrics which may or may not be of different nature.

In general, regardless of the type of method, composite fabrication includes impregnation of the reinforcing fibers with the polymer matrix material ("melt impregnation"), and subsequent cooling to room temperature to form the final solid composite. The melt impregnation includes contacting the reinforcing fibers with a melt of the polymer matrix. To make the polymer matrix material processable, the melt is at a temperature of at least Tm* to less than Td*, where Tm* is the melt temperature of the polyamide in the polymer matrix having the highest melt temperature and Td* is the onset decomposition temperature of the polyamide having the lowest onset decomposition temperature in the melt in the case of semi-crystalline polyamide. In the case of amorphous polyamide, to make the polymer matrix processable, the melt is therefore at a temperature greater than Tg + 50 °C, in particular Tg + 100 °C, especially from Tg + 50°C to Tg + 280°C.

As follows from the foregoing, the method according to the invention is a method for the production of a fiber reinforced polymer composite comprising at least impregnating continuous reinforcing fiber with a polymer matrix comprising a polyamide comprising at least structural units of formula (I) according to the invention in the molten states, pulling the polyamide-impregnated fiber through a die, and at least partially solidifying polyamide-impregnated fiber in order to obtain the fiber reinforced polymer composite.

In place of a die, the method according to the invention may carry out techniques using wave/PIN, calendaring, double belt press. The technique can be selected by a person skilled in the art according to the requirements.

The method according to the invention consists in continuously pulling through a heated die one or more continuous reinforcing fibers in such a way as to impregnate them with a polymer matrix in the molten state so as to obtain a finished or semi-finished rod or article. It is perfectly possible to perform impregnation of one or more continuous reinforcing fiber. This method is known as being of pultrusion process type.

In particular embodiment, a plurality of fibers are aligned along their length and pulled in a direction along their length. In some embodiments, the plurality of fibers is delivered from a spool(s) of the reinforcing fiber.

Once the reinforcing fibers are impregnated with the polymer matrix, the impregnated reinforcing fibers are conveying to a cooling zone in order to at least partially solidify the polyamide-impregnated fiber for obtaining the fiber reinforced polymer composite and obtain tapes or shape it to form the profile.

In a first embodiment, the step of impregnating the continuous reinforcing fiber with the polymer matrix comprising at least polyamide comprising structural units of formula (I) is carried out by pulling the fibers through a bath including a melt of the polymer matrix. Then, the impregnated reinforcing fiber is pultruted through a heated die at a temperature which is about at the lower end of the melting range of the polyamide matrix in the case of semi-crystalline polyamide or which is greater than Tg + 50 °C, in particular Tg + 100 °C, especially from Tg + 50°C to Tg + 280°C, in the case of amorphous polyamide.

In a second embodiment, the molten polymer matrix is injected at the level of the heated die for the purposes of impregnating the reinforcing fibers also introduced into this die. This particular process is known as pultrusion-injection process.

In general, the reinforcing fiber is preheated to the required temperature before the impregnation step. For example, this impregnation step may be performed on a reinforcing fiber having a temperature less than 400°C preferably 350°C, and greater than or equal to the temperature of polymer matrix in the molten state. During this step, the reinforcing fiber is generally at a temperature ranging from 200 to 380°C.

In the case of a pultrusion-injection process, as regards the injection temperature, the polymer matrix is preferably heated such that on emergence from therefrom it is injected through the reinforcing fiber at a temperature of the same order as that of the reinforcing fiber during this step.

Thus, the polymer matrix is preferably injected at a temperature less than 380°C, and greater by at least 10°C than the melting point of said polymer matrix if comparable to a semi-crystalline material and greater by at least 100°C than the glass transition temperature of said polymeric composition if comparable to an amorphous material. It is therefore generally at a temperature ranging from 200 to 380°C during its injection.

After being pulled through the melt, in some embodiments, the impregnated fiber can be further heated to further aid in the impregnation.

Preferably, the impregnation is total, which signifies that no zone of reinforcing fiber remains non-impregnated with the polymer matrix.

Impregnation of a continuous reinforcing fiber with a polymer matrix of the invention may be made by several ways know by a person skilled in the art. Notably, conditions such as line speed and dwell time in the die and die temperatures are selected to insure that the material being pultruded reaches a temperature as previously expressed to ensure a proper pultrusion operation. Heating may be done by a variety of means, including contact heating, radiant gas heating, infrared heating, convection or forced convection air heating, induction heating, microwave heating or combinations thereof.

As used herein, the term "impregnation of a continuous reinforcing fiber with a polymer matrix" means that the continuous reinforcing fiber is impregnated with a matrix resin composition; so that the matrix resin composition encapsulates and embeds the fibrous material so as to form an interpenetrating network of fibrous material substantially surrounded by the matrix resin composition.

Thus, it is for a person skilled in the art to adjust the pulling speed in such a manner that it is compatible with good impregnation of the reinforcing fiber, with regard in particular to the characteristics of the polymer matrix or the reinforcing fiber used, the injection rate of the polymer matrix, the tapes to be produced or again the desired geometry (for example shapes, thickness) of the profile to be produced.

In the same way, it is for a person skilled in the art to adjust the temperature, the flow rate and injection pressure of the polymer matrix in such a manner that they are compatible with good impregnation of the reinforcing fiber, with regard in particular to the characteristics of the polymer matrix or of the reinforcing fiber used, the pulling speed, the tapes to be produced or also the desired geometry (for example shapes, thickness) of the profile to be produced.

Subsequent to melt impregnation, the impregnated reinforcing fiber is conveyed to a cooling zone in order to be cooled to form a solid composite. In some embodiments, the composite can be shaped to a desired geometry prior to be cooled to room temperature. In some such embodiments, subsequent to melt impregnation or prior to or during cooling, the impregnated reinforcing fibers can be passed through a die to form the composite having the desired geometry.

Cooling of fiber reinforced polymer composite may be made by several ways know by a person skilled in the art such as for instance by cooling the pultruded article below the lower end of the melting range of the polymer matrix. Cooling can take place in the exit region of the die or outside the die between the die exit and the pullers. The pultruded article may be cooled while under confinement in a die or similar structure or while under tension from the pullers.

The cooling may advantageously be carried out rapidly, so as to make it possible winding or in order to maintain the properties of the article. The cooling may in particular be carried out in less than 5 minutes, more preferentially in less than one minute. The impregnated reinforcing fiber may for example be cooled by means of a cold fluid circuit. The cooling step may be carried out under nitrogen. The composite article may also optionally be transferred into a cold mold, optionally under pressure.

In general, after the cooling step, a winding step is carried out on the resulting fiber reinforced polymer composite.

The resulting fiber reinforced polymer composite tapes can then cut to the desired lengths to produce pultruded parts. Cutting of the fiber reinforced polymer composite may be made by several ways know by a person skilled in the art such as by the use of cutters, water jet cutting, laser cutting, or cutting nozzles. Debris generated during the cutting process may be collected by using a vacuum-based extraction unit. For profiles, exemplary pultruded parts include poles, posts, handles, rods, tubes, beams, e.g., I-beams, decking, arrow shafts, struts, and the like.

In a particular embodiment, the method according to the invention, comprising at least the steps of:
(a) impregnating a continuous fiber reinforcement with a polymer matrix comprising at least a polyamide comprising the structural units of formula (1),
(b) pultruding the continuous reinforcing fiber impregnated with the polyamide through a heated die; maintaining the temperature of the impregnated reinforcing fiber being pultruded at a temperature which is at least about at the lower end of the melting range of the polymer matrix in the case of semi-crystalline polyamide or which is greater than Tg + 50 °C, in particular Tg + 100 °C , especially from Tg + 50°C to Tg + 280°C, in the case of amorphous polyamide;
(c) conveying the impregnated reinforcing fiber to a cooling zone; and
(d) cutting and recovering the fiber reinforced polymer composite.

The implementation of the steps of impregnation and shaping may be ensured by means of different devices.

According to a first embodiment, these two steps may be implemented in a common die. According to this alternative, the common die may comprise successively at least one hot entry zone, a hot impregnation zone equipped with an injection chamber, a thermal control zone, and a shaping zone where the profile is cooled in a controlled manner.

According to a second embodiment, the two steps may be implemented in two distinct and consecutive dies, whether or not spaced apart. According to this alternative, the first die may successively comprise at least one hot entry zone and one hot impregnation zone equipped with an injection chamber, and the second die may comprise a shaping zone.

According to another alternative of this second embodiment, the second die is constituted of a calendering machine or of a train of several calendering machines at controlled temperature.

According to another of its aspects, the present invention relates to the fiber reinforced polymer composite obtainable by the method according to the invention. This fiber reinforced polymer composite is a thermoplastic composite.

In some embodiments, the fiber reinforced polymer composite includes at least 10 wt.%, at least 20 wt.%, at least 25 wt.%, at least 30 wt.%, at least 35 wt.% or at least 40 wt.% of the polymer matrix, relative to the total weight of the composite. When the concentration of the polyamide in the polymer matrix is equal to 100% relative to the total weight of the matrix composition, the composite includes at least 10 wt.%, at least 20 wt.%, at least 25 wt.%, at least 30 wt.%, at least 35 wt.% or at least 40 wt.% of the polyamide, relative to the total weight of the composite.

Additionally or alternatively, the composite includes no more than 90 wt.%, no more than 80 wt.%, no more than 70 wt.%, no more than 60 wt.%, no more than 55 wt.%, no more than 50 wt.%, no more than 45 wt.%, or no more than 25 wt.% of the polymer matrix, relative to the total weight of the composite. When the concentration of the polyamide in the polymer matrix is equal to 100% relative to the total weight of the matrix composition, the composite includes no more than 90 wt.%, no more than 80 wt.%, no more than 70 wt.%, no more than 60 wt.%, no more than 55 wt.%, no more than 50 wt.%, no more than 45 wt.%, or no more than 25 wt.% of the polyamide, relative to the total weight of the composite.

The fiber reinforced polymer composite includes at least 10 wt.%, at least 20 wt.%, at least 25 wt.%, at least 30 wt.%, at least 35 wt.%, at least 40 wt.%, at least 45 wt.%, at least 50 wt.% or at least 55 wt.% of the reinforcing fiber, relative to the total weight of the thermoplastic composite. Additionally or alternatively, the thermoplastic composite includes no more than 90 wt.%, no more than 80 wt.%, no more than 75 wt.%, no more than 70 wt.%, no more than 65 wt.% or no more than 60 wt.% of the reinforcing fiber, relative to the total weight of the thermoplastic composite. In embodiments in which the at least one reinforcing fiber is a plurality of reinforcing fibers, the total concentration of reinforcing fibers is within the ranges above.

In the following paragraphs, the term polymer matrix can be replaced by the term polyamide in the case of the concentration of the polyamide in the polymer matrix is equal to 100% relative to the total weight of the matrix composition.

The composite includes the reinforcing fiber impregnated with the polymer matrix. In some embodiments, the composites can be unidirectional composites. In other embodiments, the composite can be a multidirectional composite, in which the fibers have a more complex structure.

With respect to unidirectional composites (*e.g*. tapes), the orientation of the reinforcing fibers within the polymer matrix material is generally aligned along the length of the reinforcing fibers (the longest dimensions of the fiber). Unidirectional composites are also sometimes referred to as composite tapes. As used herein, generally aligned fibers are oriented such that at least 70%, at least 80%, at least 90% or at least 95% of the reinforcing fibers have length that is within 30 degrees, within 25 degrees, within 20 degrees, within 15 degrees, or within 10 degrees along a length of one of the fibers.

In other embodiments, the composite can be a multidirectional composite (*e.g*. laminate). As noted above, unidirectional composites have fibers that are generally aligned along a single direction. Because the tensile strength of the composite is greater along the length of the fiber, unidirectional composites have excellent tensile strength along a single dimension, and reduced tensile strength along other (*e.g*. perpendicular) directions. In contrast, multidirectional composites have reinforcing fibers aligned along multiple dimensions and, therefore, have improved tensile strength in multiple dimensions *(e.g.* more isotropic). In such embodiments, the reinforcing fibers in the polymer matrix can be arranged as (balanced or unbalanced) a woven fabric, a non crimp fabric or a layered unidirectional tapes or any combination of one or more therefore.

An additional aspect of the present invention is a fiber reinforced polymer composite, comprising at least a continuous reinforcing fiber aligned lengthwise in a polymer matrix comprising a polyamide comprising at least a structural unit of formula (1):

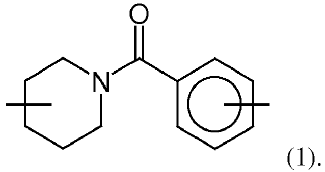

This fiber reinforced polymer composite is a thermoplastic composite.

In some embodiments, the fiber reinforced polymer composite includes at least 10 wt.%, at least 20 wt.%, at least 25 wt.%, at least 30 wt.%, at least 35 wt.% or at least 40 wt.% of the polymer matrix, relative to the total weight of the composite. When the concentration of the polyamide in the polymer matrix is equal to 100% relative to the total weight of the matrix composition, the composite includes at least 10 wt.%, at least 20 wt.%, at least 25 wt.%, at least 30 wt.%, at least 35 wt.% or at least 40 wt.% of the polyamide, relative to the total weight of the composite.

Additionally or alternatively, the composite includes no more than 90 wt.%, no more than 80 wt.%, no more than 70 wt.%, no more than 60 wt.%, no more than 55 wt.%, no more than 50 wt.%, no more than 45 wt.%, or no more than 25 wt.% of the polymer matrix, relative to the total weight of the composite. When the concentration of the polyamide in the polymer matrix is equal to 100% relative to the total weight of the matrix composition, the composite includes no more than 90 wt.%, no more than 80 wt.%, no more than 70 wt.%, no more than 60 wt.%, no more than 55 wt.%, no more than 50 wt.%, no more than 45 wt.%, or no more than 25 wt.% of the polyamide, relative to the total weight of the composite.

The fiber reinforced polymer composite includes at least 10 wt.%, at least 20 wt.%, at least 25 wt.%, at least 30 wt.%, at least 35 wt.%, at least 40 wt.%, at least 45 wt.%, at least 50 wt.% or at least 55 wt.% of the reinforcing fiber, relative to the total weight of the thermoplastic composite. Additionally or alternatively, the thermoplastic composite includes no more than 90 wt.%, no more than 80 wt.%, no more than 75 wt.%, no more than 70 wt.%, no more than 65 wt.% or no more than 60 wt.% of the reinforcing fiber, relative to the total weight of the thermoplastic composite. In embodiments in which the at least one reinforcing fiber is a plurality of reinforcing fibers, the total concentration of reinforcing fibers is within the ranges above.

Preferably, the ratio between the continuous fiber reinforcement material and the polymer materials in the composite structure, is comprised from 30 to 90 volume percent and more preferably between 40 and 60 volume percent fibrous material, the percentage being a volume-percentage based on the total volume of the composite structure.

In the following paragraphs, the term polymer matrix can be replaced by the term polyamide in the case of the concentration of the polyamide in the polymer matrix is equal to 100% relative to the total weight of the matrix composition.

The fiber reinforced polymer composite, comprising at least a continuous reinforcing fiber aligned lengthwise in a polymer matrix comprising a polyamide comprising at least a structural unit of formula (I) according to the invention is a unidirectional composite ("tape"). Thus, the orientation of the reinforcing fibers within the polymer matrix material is aligned along the length of the reinforcing fibers (the longest dimensions of the fiber). Aligned fibers in this fiber reinforced polymer composite are oriented such that at least 70%, at least 80%, at least 90% or at least 95% of the reinforcing fibers have length that is within 30 degrees, within 25 degrees, within 20 degrees, within 15 degrees, or within 10 degrees along a length of one of the fibers.

The composite structures according to the present invention may be used in a wide variety of applications such as for example as components for automobiles, trucks, commercial airplanes, aerospace, oil and gas drilling components (*e.g*. downhole drilling tubes, chemical injection tubes, undersea umbilicals and hydraulic control lines), rail, household appliances, computer hardware, hand held devices, recreation and sports, structural component for machines, structural components for buildings, structural components for photovoltaic equipments or structural components for mechanical devices.

Examples of automotive applications include without limitation seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles and fire extinguishers and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, computers.

Should the disclosure of any patents, patent applications, and publications which are incorporated herein by reference conflict with the description of the present application to the extent that it may render a term unclear, the present description shall take precedence.

### EXAMPLE

For the preparation of the polyamide, the following starting materials were used:
Isophthalic acid, 99%, from Sigma-Aldrich.
4,4'-Trimethylenedipiperidine, 97%, from Sigma-Aldrich.

For determining the properties of the obtained polyamide, the following methods were used:

### ▪ Thermogravimetric Analysis (TGA)

The TGA experiments were performed on raw samples in order to obtain a degradation temperature (T_{d}) at 1% mass loss which constitutes an important parameter to be considered for the DSCs. Mass loss was measured for each sample by increasing the temperature from 30 °C to 600 °C, with 10 ° C/min under air flow (presence of oxygen).

### ▪ Differential Scanning Calorimetry (DSC)

The glass transition temperatures (Tg) were measured using a DSC of the company TA instruments.
The DSC analysis was carried out in 3 cycles as follows:
- Cycle 1: -10°C to 350°C, 10°C/min
- Cycle 2: 350°C to 10°C
- Cycle 3: 10°C to 350°C (Tg)

### ▪ Tensile Properties

Bars were injected from the previously dried polymer granules to obtain test pieces for mechanical tests.

The tensile tests were carried out according to the ISO 527-2 standard corresponding to tensile tests on thermoplastic test pieces as follows:
- dumbbell tube type 5A,
- zeroing of the force sensor,
- placing the test piece in the jaws,
- clamping the jaws,
- set a zero force (by moving the crossbar) to neutralize the forces (tension / compression) that occur during tightening,
- start the test,
- once the pretension is reached (0.1MPa), position the extensometer by contact (L0: 20mm),
- removal of the sample at 2% deformation; the deformations of the specimen are then determined with the traverse displacement (corrected by a factor k, determined before the removal of the extensometer),
- stop the test when the test piece breaks.

Traverse speed during the determination of the module was 1mm/min.

Module was between 0.05 and 0.25% deformation.

Test speed after the module was 50mm/min.

Carboxylic acid end-groups (CEG) concentration and amine end-groups (AEG) concentration were determined by potentiometric titration (unit: meq/kg).

### The Production of a polyamide TMDP.I

The polyamide was prepared by polycondensation in the melt in a stirred pressure autoclave. 63.41 g (0.38 mol) of isophthalic acid and 82.39 g (0.39 mol) of 4,4'-Trimethylenedipiperidine were poured with 61.0 g of demineralized water, 0.012 g of phosphoric acid 85% and antifoam in a stainless steel clave. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 288°C. Vacuum was then applied to reach 500 mbar and kept for 30 min at the same temperature under continuous stirring. The vacuum was broken with nitrogen and the polymer was extruded in a strand. A glassy polymer was obtained which contained polyamide chains represented by the following formula: 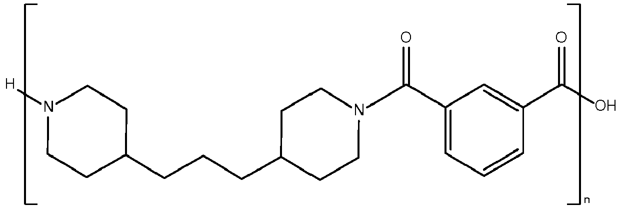 wherein n denotes the mole fraction of the polyamide repeating unit. The polymer thus obtained had the following analytical data:
The amorphous had, at a relative humidity of zero (RH0), a glass transition temperature Tg = 119 ° C, measured in DSC according to the protocol described above; and a thermal degradation Td = 380 ° C, measured according to the protocol described above.

End-groups titrations were as follow: CEG = 146 meq/kg, AEG = 103 meq/kg, corresponding to an estimated Mn of 8050 g/mol.
The mechanical properties of this TMDP.I were measured according to the conditions defined above after injection of specimen injected under the conditions described above. Under these conditions, the TMDP.I showed tensile behavior ductile with an elastic modulus (E) of 3210MPa, an ultimate elongation of 7%.
This TMDP.I has a viscosity at 100 rad/s= 99Pa.s at 340°C, measured with a rheometer ARES-G2 (cone/plate geometry, RH < 1000ppm).
Number average molecular weight (Mn) and weight-average molecular weight (Mw) have been also determined by Size Exclusion Chromatography and Polydispersity Index (PI=Mw/Mn) has been calculated. Size Exclusion Chromatography for measuring absolute molecular weights is performed in Hexafluoroisopropanol (HFIP) with 25 mM sodium trifluoroacetate (0.225 % w/w sodium trifluoroacetate in HFIP) as a solvent at 40°C, followed by refractometry RI. The system was calibrated using the set of narrow polydisperse PMMA standard samples.

| Mn eq PMMA (GPC) | Mw eq PMMA (GPC) | PI |
|---|---|---|
| 16224 | 67885 | 4.2 |

## Claims

1. A method for the production of a fiber reinforced polymer composite comprising at least impregnating continuous reinforcing fiber with a polymer matrix comprising at least a polyamide comprising structural units of formula (1): 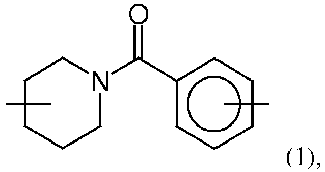 pulling the polyamide-impregnated fibers through a die, and at least partially solidifying polyamide-impregnated fiber in order to obtain the fiber reinforced polymer composite.

2. The method according to claim 1, wherein the continuous reinforcing fiber is glass or carbon fiber.

3. The method according to claim 1 or 2, wherein the polyamide comprises structural units of formula (2): 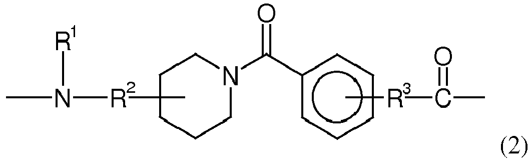
wherein R¹ is hydrogen, an organic monovalent residue, or an organic divalent residue which forms a ring together with R², and
R² and R³ are independently a bond or an organic divalent residue.

4. The method according to claim 3, wherein R¹ is hydrogen or a linear, branched, cyclic and/or aromatic C₁₋₃₀ hydrocarbon residue which optionally forms a ring together with R², and R² and R³ are independently a bond or a linear, branched, cyclic and/or aromatic C₁₋₃₀ hydrocarbon residue.

5. The method according to claim 3 or 4, wherein R¹ is hydrogen or a C₁₋₆ alkyl residue which optionally forms a ring together with R², R² is a bond or a linear, branched and/or cyclic C₁₋₂₄ alkyl residue, preferably a bond or a linear C₁₋₂₄ alkyl residue, and R³ is a bond, a C₁₋₆ alkylaryl residue or an aryl residue, preferably a bond or a phenyl residue.

6. The method according to any one of the preceding claims in which the polyamide is a homopolymer.

7. The method according to any one of the preceding claims wherein the polyamide is obtainable by polymerization of a diamine of formula (3): 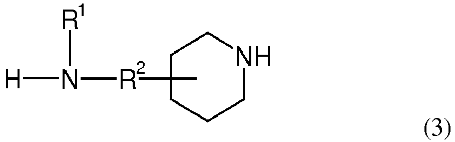 wherein R¹ and R² are defined as in any one of claims 2 to 4, with an aromatic dicarboxylic acid, ester or halogenide of formula (4): 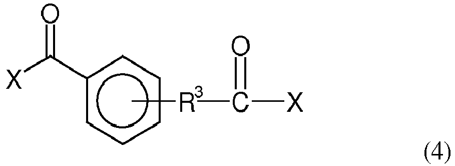 wherein R³ is defined as in any one of claims 2 to 4 and X is hydroxy, halogen, C₁₋₆ alkoxy or C₆₋₂₀ aryloxy.

8. The method according to any one of the preceding claims wherein the diamine has the formula (5): 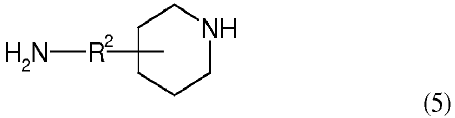 wherein R² is as in any one of the preceding claims.

9. The method according to any one of the preceding claims wherein the diamine has the formula (6): 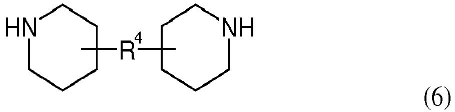 wherein R⁴ is a bond or a linear, branched and/or cyclic C₁₋₂₄ alkyl residue, preferably a bond or a linear C₁₋₂₄ alkyl residue.

10. The method according to any one of the preceding claims wherein the diamine has the formula (7): 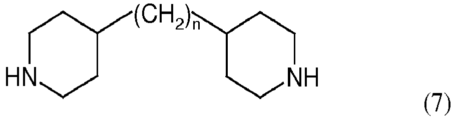 wherein n is an integer of 0 to 24, preferably 0 to 16, more preferably 3 to 16.

11. The method according to any one of the previous claims wherein in the aromatic dicarboxylic acid or ester of formula (4) R³ is a bond or aryl, preferably a bond or phenyl.

12. The method according to any one of the previous claims wherein the diamine is selected from 4,4'-bipiperidine, 4,4'-ethylenedipiperidine, 4,4'-trimethylenedipiperidine, 4-aminopiperidine, 4-(aminomethyl)piperidine, 2-(aminomethyl)piperidine, 3-(aminoethyl)piperidine, and 4-(aminobutyl)piperidine and the aromatic dicarboxylic acid is selected from isophthalic acid, terephthalic acid, diphenic acid, and biphenyl-4,4'-dicarboxylic acid; preferably wherein the diamine is selected from 4,4'-trimethylenedipiperidine and 4-aminopiperidine and the aromatic dicarboxylic acid is selected from isophthalic acid, terephthalic acid and diphenic acid.

13. The method according to any one of the preceding claims in which the polyamide comprises an other diamine of formula H2N-R-NH2 wherein R is an aliphatic, an aromatic, an arylaliphatic or an alkylaromatic radical.

14. The method according to any one of the preceding claims in which the polyamide comprises also at least one dicarboxylic acid.

15. The method according to any one of the preceding claims in which the polyamide comprises recurring units derived from:
TMDP.T (trimethylenedipepiridine, terephtalic acid)
TMDP.I (trimethylenedipepiridine, isophthalic acid)
TMDP.DA (trimethylenedipepiridine, diphenic acid)
TMDP.T/ 6T (trimethylenedipepiridine, terephtalic acid, hexamethylene diamine)
TMDP.I/ 6I (trimethylenedipepiridine, isophthalic acid, hexamethylene diamine)
TMDP.T / 9T (trimethylenedipepiridine, terephtalic acid, nonanediamine)
TMDP.I / 9I (trimethylenedipepiridine, isophthalic acid, nonanediamine)
TMDP.T / 10T (trimethylenedipepiridine, terephtalic acid, decanediamine)
TMDP.I / 101 (trimethylenedipepiridine, isophthalic acid, decanediamine)
TMDP.T/TMDP.6 (trimethylenedipepiridine, terephtalic acid, adipic acid)
TMDP.I/TMDP.6 (trimethylenedipepiridine, , isophthalic acid, adipic acid)
TMDP.T/TMDP.10 (trimethylenedipepiridine, terephtalic acid, sebacic acid)
TMDP.I/TMDP.10 (trimethylenedipepiridine, isophthalic acid, sebacic acid)

16. The method according to any one of the preceding claims, comprising at least the steps of:
(a) impregnating a continuous fiber reinforcement with a polymer matrix comprising at least a polyamide comprising the structural units of formula (I),
(b) pultruding the continuous reinforcing fiber impregnated with the polyamide through a heated die; maintaining the temperature of the impregnated reinforcing fiber being pultruded at a temperature which is at least about at the lower end of the melting range of the polymer matrix in the case of semi-crystalline polyamide or which is greater than Tg + 50 °C, in particular Tg + 100 °C, especially from Tg + 50°C to Tg + 280°C, in the case of amorphous polyamide;
(c) conveying the impregnated reinforcing fiber to a cooling zone; and
(d) cutting and recovering the fiber reinforced polymer composite.

17. The method according to any one of the preceding claims, wherein the concentration of the polyamide in the polymer matrix is at least 50 wt.%, at least 60 wt.%, at least 70 wt.% at least 80 wt.%, at least 90 wt.%, at least 95 wt.% or at least 99.5 wt.%, or equal to 100 wt.%, relative to the total weight of the matrix composition.

18. The method according to any one of the preceding claims, wherein the concentration of the polymer matrix is at least 10 wt.%, at least 20 wt.%, at least 25 wt.%, at least 30 wt.%, at least 35 wt.% or at least 40 wt.%, relative to the total weight of the composite.

19. The method according to any one of the preceding claims wherein the concentration of the fiber is at least 20 wt.%, at least 25 wt.%, at least 30 wt.%, at least 35 wt.%, relative to the total weight of the thermoplastic composite.

20. A fiber reinforced polymer composite obtainable by the method as claimed in one of claims 1 to 19.

21. A fiber reinforced polymer composite, comprising at least a continuous reinforcing fiber aligned lengthwise in a polymer matrix comprising a d polyamide comprising at least a structural unit of formula (1):

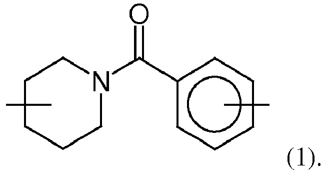

22. The fiber reinforced polymer composite according to claim 21, wherein the concentration of the polyamide in the polymer matrix is at least 50 wt.%, at least 60 wt.%, at least 70 wt.% at least 80 wt.%, at least 90 wt.%, at least 95 wt.% or at least 99.5 wt.%, or equal to 100 wt.%, relative to the total weight of the matrix composition.

23. The fiber reinforced polymer composite according to claim 21 or 22, wherein the concentration of the polymer matrix is at least 10 wt.%, at least 20 wt.%, at least 25 wt.%, at least 30 wt.%, at least 35 wt.% or at least 40 wt.%, relative to the total weight of the composite.

24. The fiber reinforced polymer composite according to claims 21 to 23, wherein the concentration of the fiber is at least 20 wt.%, at least 25 wt.%, at least 30 wt.%, at least 35 wt.%, relative to the total weight of the thermoplastic composite.

25. An article comprising the fiber reinforced polymer composite according to claims 21 to 24 or obtained by the method as claimed in one of claims 1 to 19, wherein the article is selected from the group consisting of components for automobiles, trucks, commercial airplanes, aerospace, oil and gas drilling components, rail, household appliances, computer hardware, hand held devices, recreation and sports, structural component for machines, structural components for buildings, structural components for photovoltaic equipments or structural components for mechanical devices.
